# EUROPEAN PATENT APPLICATION

(11) **EP 1 712 138 A1**
(43) Date of publication of application: **18.10.2006**
(21) Application number: 05007916.9
(22) Date of filing: 12.04.2005
(51) Int. Cl.: A23L 1/00, A23L 1/40, B01J 2/00

(54) **Granulation process using microwaves**

(71) Applicant: NESTEC S.A., 1800 Vevey (CH)
(72) Inventor: Richter, Bernd, 7703 Rielasingen-2 (DE); Palzer, Stefan, 78337 Oehningen (DE)
(74) Representative: Thomas, Alain

(57) **Abstract**

The present invention relates to a granulation process for food powdery products such as seasonings, bouillons and the like in which the powdery material is subjected to a microwave treatment followed by a mechanical treatment. The powdery material to be agglomerated by the process object of the present invention comprises fat or other component which undergoes at least partial melting while subjected to heat.

## Description

The present invention relates to a process for the agglomeration and granulation of food powder materials, such as bouillon powder and other kind of culinary powder mixes for example.

Culinary powdery products such as bouillon, seasoning or mixes in the form of ready to use powders are very well known and well appreciated worldwide. These kinds of products are obtained by precise mixing of powdery ingredients such as starch, salt, maltodextrin and sugars, powdery aromas, taste enhancers, spices and food particles such as herb leaves or vegetable pieces for example. The medium particle diameter of the different powdered ingredients may range from 30 µm to 1000 µm and it is usual to find some very fine particles in the product in the form of dusts. These dusts are not well perceived by the consumer from the qualitative point of view and generate a somewhat cloudy aspect to the product upon pouring in a pan for example. In addition the colour of the product is much lighter than the colour of a powder containing less dust. The density of such a product containing some fine particles can also be higher then the density of an agglomerated product. Moreover, the powdery nature of such products with the presence of fine dusts implies difficulties for dosing in the manufacturing process and during the filling of sachets for example.

It is therefore desirable to provide this kind of powdery and pulverulent product in the form of agglomerates exhibiting a narrow granulometry range, a bigger medium diameter of the particles and no substantial dusts as well (which means less fine particles). A product with such disperse properties shows an increased flowability, a nicer optical aspect (e.g. darker colour)and can have an improved dispersibility as well as a decreased bulk density.
Agglomeration broadly defined consists in the formation of clusters of very small individual particles by producing adhesive films on the surfaces of the individual particles by melting/plastifying the surface of all or specific particles or by adding liquid binders and then uniting multiplicities of the same to form a lacy network. Such unification can be achieved by collisions of single particles in a mechanical or pneumatically fluidized bed. In addition agglomeration can be achieved by applying pressure on the particle bulk to increase the contact area between the single particles and thus increasing the adhesion forces. Such agglomeration processes are called pressure agglomeration. A combination of both agglomeration principles is possible. A third possibility to agglomerate particles is given by applying or modifying certain drying processes like freeze or spray drying. During the drying process the surface of the particles is getting sticky and thus single particles colliding with each other or positioned close to each other can form agglomerates or cakes which are then milled down.

The lacy network produced by agglomeration consists of defined voids or interstices between the original particles thereby causing very rapid permeation and absorption of water or other liquids and consequently rendering the product readily soluble or dispersible.

In agglomerating powdered materials, addition of small quantities of solid or liquid adhesive substances is often useful. However, many pulverulent materials, including a number of food-ingredients used in packaged mixes and including many powdered chemicals, inherently develop adequate surface adhesiveness for the production of agglomerates thereof when subjected to moisture and/or heat. Surface contact of the adhesive particles and subsequent hardening of the adhesive substances are of course requisite in the formation of agglomerates. Such agglomeration processes are called, independently whether the binder is already a part of the product or added to facilitate the agglomeration, Binder or Melt agglomeration.
Applying pressure (pressure agglomeration) can also be used to agglomerate particles. Pressure simply increases the contact area between the particles and thus the adhesion forces between two neighboring particles are increased as well.

The prior art processes and apparatus used for binder, melt or pressure agglomeration have limitations and disadvantages in the production of agglomerates from many of the available pulverulent materials and particularly in the case of materials possessing inherent adhesive characteristics. In general, the prior art methods and apparatus for binder agglomeration of powdered material fall into two classes : -( 1) Methods and apparatus which subject the powdered material during rapid mechanical or pneumatical agitation thereof to steam, very humid air or aerosols/droplets of water based binder solutions. Revolving mixing agitators and/or a fluidising air to fluidize the powder are generally employed with means for distributing the moistening medium on all of the solid particles in agitated and dispersed state ;
- (2) Methods and apparatus which atomize the pulverulent material into an enveloping atmosphere of steam or humid air. A final drying step is necessary in order to avoid sticking together of moist agglomerates and to ensure a good shelf life.
   These traditional processes have been employed for many years and have been adapted and improved slightly along the time.

However, such processes are cumbersome, involve specialized apparatus, are energy and time consuming and there is therefore a need for a simple, cheap and quick process for agglomeration of powdery material. Especially drying of sticky ingredients or powders containing such ingredients (e.g. plant, meat and yeast extracts or fruit pulp for example) is very difficult because the fluidized powder bed easily collapses due to the high adhesion forces and the bottom sieve of a pneumatically fluidized bed used for drying can be blocked by sticking particles. In addition the final drying can damage sensitive product components and can cause a loss of volatile flavor components.

Accordingly, the present invention concerns a process for the agglomeration of powdery material comprising the steps of :
- providing a powdery material comprising fat or other component which undergoes at least partial melting while subjected to heat,
- applying a microwave radiation to the powdery material,
- applying a mechanical treatment to the microwave treated material in order to shape the agglomerates.

It has been surprisingly found that the application of microwave energy to a powdery material containing fat or components which undergoes at least partial melting while subjected to moderate temperatures (bellow about 100 °C) allows an even heating of the particle bulk and in case the at least partially melting component contained is directly sensitive to microwaves, the latter partly melts, gets plastic and provides sticking effect to the particles of the powdery material. If the said component is insensitive to microwaves some of the surrounding components are heated and the heat is transferred by particle/particle contacts to the insensitive and melting/plastifying component. Indeed, even if powdery material are very low in water, they still contain some residual water that absorbs microwaves energy and thus heats the neighbourhood implying partial melting of the heat sensitive components.

The powdery material to be agglomerated by the process according to the present invention comprises fat or other component which undergoes at least partial melting while subjected to heat acts as sticking agent upon microwave heating. The powdery materials that are of prime interest for the application of the present process are culinary powdery products since culinary products such as dry mixes, seasonings or bouillon do contain at room temperature solid animal or plant fat. In fact, during the manufacturing of such dry products, the fat or other component which undergoes at least partial melting while subjected to heat are mixed with various other components in such a way that the they are dispersed in the powdery material in the form of a kind of coating around the particles or as single homogenously distributed particles. As explained above, the particles coated-on with the fat or other component which undergoes at least partial melting while subjected to heat act as clusters on which all other particles stick and therefore form agglomerates.
The fat or other component which undergoes at least partial melting while subjected to heat contained in the powdery material used in the process according to the present invention may be chosen in the group comprising fats with a solid fat content which is typically comprised at about 20°C between about 70 and 95 %, waxes, mono- and di-glycerides, amorphous sugars, meat extracts, and plant extracts alone or in combination.
If, as described, fat with the mentioned solid fat content is used as binding agent, it is solid at a room temperature of about 20°C and starts to melt and to become plastic and easy to deform at a temperature of about 25 to 70 °C. Suitable fats may be chosen in the group comprising: palm fat, hardened vegetable oils like hardened sunflower oil, hardened canola oil, hardened soya oil, hardened peanut oil, cocoa butter, butter fat and other animal fats solid at room temperature such as beef and pork fat for example.

The microwave heating may be preferably achieved continuously but it can also be done by pulses in a microwave tunnel or a microwave oven for example. The microwave energy to be applied to the material to be granulated may ranges from about 5 to 200 kJ per kg of powder to be agglomerated. The microwave energy applied is dependent upon the quantity of powdery material to be agglomerated and the product composition as well as on the specific heat capacities of the single components. The advantage of microwaves is that they provide a homogeneous heating inside the product and substances containing molecules with a non-geometric distribution of the electrical load in the molecules (e.g. dipoles like water) are particularly sensitive to them. Then, such components are heated preferably amongst all other components of the powdery material. In addition it would be possible to increase the moisture of certain components before microwave treatment to make them sensitive to the electromagnetic waves.
Microwave heating maybe applied to the product to be granulated whether in bulk or in move such as in a mechanical (e.g. a high shear mixer) or pneumatical fluidized bed for example. Applying microwave on particles on the move may be advantageous but is absolutely not compulsory since the main advantage of microwave vis-à-vis convection or contact heating is that the distribution of heat is homogenous in the whole volume of the product since only the receptive component to microwave, will undergo heating.

The combination of duration and intensity of microwave heating is dependent upon the temperature needed to plasticized the fat or other component which undergoes at least partial melting while subjected to heat contained in the powdery material as well as upon the quantity of the latter contained. For example, in the case of a 1 kg of beef bouillon powder containing about 15 % of palm fat, application of microwave to the bulk with an intensity of about 0.5-1.5 kW on a product mass flow of about 10-50 kg/h would be sufficient to partially melt the fat in order to get it sticky on its surface. Palm fat typically shows a solid fat content temperature curve which ranges from 0 % solid fat at 50-70 °C to more than 95 % solid fat at temperatures lower than 5 °C. Heating of the powder mass at about 25-40 °C is sufficient to partially melt it and get it sticky.

The quantity of fat or other component which undergoes at least partial melting while subjected to heat in the powdery material may range from 1-50 %, preferably from 5-20 %, in weight based on the total weight of the powdery material. Too much binder would involve the formation of too big particles and the risk of a collapse of the moving powder bed while not enough fat would not give the sticking effect necessary for proper agglomeration.

As exposed above, preferred powdery materials for practicing the present process may advantageously be bouillons, seasonings, dry mixes and other kind of culinary mixes. These products usually comprise very different kind of powdery materials such as, for example starches, sugars, salt, glutamate, yeast, plant and meat extracts, maltodextrins, saccharose, as well as flavors and of course fat. However other kind of powdery food materials with suitable fat content may be successfully subjected to the present process. For example, milk powder that includes fat may be advantageously agglomerated according to the present process.

Once the powdery material has been subjected to the microwave treatment that partially melts the fat or other component which undergoes at least partial melting while subjected to heat contained therein, a mechanical treatment is applied in order to create the agglomerates. Such mechanical treatment can be done by mixing the powder in a high shear mixer or by passing it through a kind of extruder or even by compacting it immediately using tablet presses or roller compactors. Revolving beater arms or equivalent mechanical agitators maybe employed. When the product is getting agglomerable thanks to its sticking properties because of partial melting or plastifying of the fat or other component which undergoes at least partial melting while subjected to heat, it is submitted to such a mechanical treatment to shape the aggregates to the desired size whether by applying pressure or by provoking particle collisions which under certain conditions cause a sticking together of the particles.
Such mechanical treatment may be achieved thanks to any mechanical equipment suitable for mixing, contacting and breaking up big lumps of sticking clusters or by using tableting, extrusion or compacting equipment in order to obtain agglomerates with a narrow particle size range from about 0,5 to 5 mm.
Suitable equipment for performing this step may be selected in the group comprising high shear mixers, roller compactors, tableting machines and extruders.

It is noticeable that the mechanical treatment step necessary for performing the sticking-together of particles may be achieved whether after or during the microwave heating step. This means that for example the product might be heated by microwaves and subjected to mechanical treatment in the same vessel such as a tumbler fitted with rotating blades and a microwave source for example.
A pressure agglomeration in the sense of tabletizing or roller compaction may be applied to the product after the microwave heating treatment in order to obtain stable tablets of compressed product.
In the case of powdery culinary products, the medium particle size obtained after agglomeration process according to the present invention may range from about 0.5 to 5 mm, preferably 1-3 mm.
It is noticeable that the present process does not involve any addition of water to the material to be agglomerated. Moreover, limited moistening of the powder mix before subjecting to microwaves may increase the ability of fat or other component which undergoes at least partial melting while subjected to heat to get sticky during heating. Indeed, the particles-to-particles sticking necessary for the formation of aggregates is simply achieved through the partial melting or plastifying of the above mentioned sensitive components present as a surface coating of particles or in form of single particles in the powder mix.
It has been noticed as well that non-fat components usually found in some culinary powdery compositions such as meat, plant and yeast extracts, powders flavour, maltodextrins and amorphous sugars for example may act as interfacial sticking agent between particles as well. This phenomenon may be explained by the fact that such components inherently present in culinary powdery products exhibit a glass transition and upon exposure to microwave, these components get plastic and sticky once heated at a temperature above their respective glass transition temperature. The temperature at which they get sticky depends very much on the moisture content of these components. The typical ingredients of culinary powdery products that show a glass transition temperature maybe the one exposed above for example. The glass transition temperature of such sensitive components range from about -50°C to 200 °C depending on the moisture content. Under usual moisture contents (up to about 10 %) in the case of culinary powders it is, typically between 20 and 80 °C. Such temperature may be easily reached by a short microwave exposure.

Omission of water or addition of a limited water amount allows therefore to avoid any drying step after the mechanical treatment creating the agglomerates. Avoiding a drying step allows substantial savings as well as it simplifies greatly the process. In addition no damage such as oxidation, Maillard browing or off flavours of the product has to be feared. Avoiding a drying step is an advantage of the present process while it is further possible to introduce fresh air or even Nitrogen in the mass of agglomerated product in order to cool down the mass and to solidify the fat or other component which undergoes at least partial melting while subjected to heat contained as quickly as possible. Then, at the end of the agglomeration process according to the present invention, a water-soluble powder with coarser particle size and improved flowability properties maybe obtained.
The thus obtained product does not contain any substantial dusts that would impart the mentioned drawbacks as well as negative visual aspect to the product.
The product obtained according to the present process is in the form of a powder made of small aggregates that flow easily and can be easily dispersed and solubilized in water.

## Claims

1. Process for the agglomeration of powdery material comprising the steps of :
- providing a powdery material comprising fat or other component which undergoes at least partial melting while subjected to heat,
- applying a microwave radiation to the powdery material,
- applying a mechanical treatment to the microwave treated material in order to shape the agglomerates.

2. Process according to claim 1, **characterized in that** the powdery materials are selected from the group comprising culinary dry mixes, seasonings or bouillons.

3. Process according to claim 1, **characterized in that** the fat or other component which undergoes at least partial melting while subjected to heat is chosen in the group comprising fats with a solid fat content which is comprised at 20°C between about 70 and 95 %, waxes, mono- and di-glycerides, amorphous sugars, meat extracts, and plant extracts alone or in combination.

4. Process according to claim 1, **characterized in that** fat is chosen in the group comprising: palm fat, hardened vegetable oils like hardened sunflower oil, hardened canola oil, hardened soya oil, hardened peanut oil, cocoa butter, butter fat and other animal fats solid at room temperature such as beef and pork fat for example.

5. Process according to claim 1, **characterized in that** the microwave energy to be applied to the material to be granulated ranges from 5 to 200 kJ per kg of powder to be agglomerated.

6. Process according to claim 1, **characterized in that** the moisture of certain components of the powdery material is increased before microwave treatment to make them sensitive to the electromagnetic waves.

7. Process according to claim 1, **characterized in that** the microwave treatment applied to the product to be granulated is applied in bulk or in move.

8. Process according to claim 1, **characterized in that** the mechanical treatment step necessary for performing the sticking-together of particles is achieved during the microwave heating step.
